## Europäisches Patentamt
## European Patent Office
## Office européen des brevets

(19)

(11) Veröffentlichungsnummer: **0 199 977**
**A2**

(12) **EUROPÄISCHE PATENTANMELDUNG**

(21) Anmeldenummer: **86103891.7**

(22) Anmeldetag: **21.03.86**

(51) Int. Cl.⁴: **A01B 59/043**

(30) Priorität: **04.04.85 DE 3512428**

(43) Veröffentlichungstag der Anmeldung:
**10.12.86 Patentblatt 86/45**

(84) Benannte Vertragsstaaten:
**AT DE FR GB IT SE**

(71) Anmelder: **DEERE & COMPANY**
**1 John Deere Road**
**Moline Illinois 61265(US)**

(72) Erfinder: **Kryscyk, Robert, Ing. grad.**
**Hockenheimer Strasse 153**
**D-6834 Ketsch(DE)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Längenveränderliche Hubstrebe.**

(57) Eine längenveränderliche Hubstrebe (62) einer Dreipunktgerätekupplung (28) besteht aus zwei gegeneinander relativ bewegbaren Teilen (106, 110), von denen der eine als Gewindespindel (106) und der andere als Gewindemutter (110) ausgebildet ist. Eine Verdrehung der Gewindespindel (106) gegenüber der Gewindemutter (110) wird über einen mittels Endkontaktschaltern (116, 118) und manuell bedienbaren Schaltern (82, 84) gesteuerten Elektromotor (158) bewirkt, wobei zwischen diesen und der Gewindespindel (106) ein Untersetzungsgetriebe - (162, 184) und ein Schneckengetriebe (180, 182) geschaltet sind.

EP 0 199 977 A2

0 199 977

FIG. 2

1a

## Längenveränderliche Hubstrebe

Die Erfindung betrifft eine längenveränderliche Hubstrebe für eine Hub-und Senkeinrichtung, insbesondere für eine Dreipunktgerätekupplung eines Ackerschleppers, mit einer Gewindespindel und einer Gewindemutter, die beide miteinander verbunden sind und über Fremdkraftantrieb gegeneinander beweglich sind.

Eine darartige bekannte Hubstrebe - (International 85 Series, EAME-6-L, 20 ENG 12/81) findet Anwendung bei einem Ackerschlepper und erstreckt sich dort zwischen einem unteren Lenker und einem Hubarm einer Dreipunktgerätekupplung.

Hubstreben dienen bei einem derartigen Anwendungsfall auch in anderen Ausführungen dazu, den Abstand des unteren Lenkers zum Boden zu verändern, ohne die gesamte Dreipunktgerätekupplung anzuheben oder abzusenken. Der Grund zum Ändern der Lage eines unteren Lenkers innerhalb der Dreipunktgerätekupplung liegt in dem Erfordernis, die Neigung eines an den Ackerschlepper angebauten Gerätes mit Bezug auf seine in Fahrtrichtung gelegene Längsmittenachse zu verstellen, wenn der Ackerschlepper mit einem Rad etwa in einer Furche fährt. So gibt es auch Geräte, wie einen Beetpflug, die ständig geneigt angebaut sein müssen, damit sie richtig arbeiten. Bei anderen Geräten müssen der verstellbare und ein weiterer unterer Lenker den gleichen Abstand zum Boden haben, damit sie z.B. bei der Saatguteinbringung einen gleichmäßigen Pflanzenwuchs gewährleisten. Eine den Ackerschlepper fahrende Bedienungsperson muß also ständig zumindest eine Hubstrebe in Abhängigkeit von dem angebauten Gerät in ihrer Länge verändern, damit das angehängte Gerät optimal und richtig arbeiten kann.

Um diesen Verstellvorgang ausführen zu können, ist die bekannte Hubspindel über ein Getriebe mit einer Kurbel verbunden, die gegebenenfalls über ein Teleskopgestänge in eine Fahrerkabine verlegt wird. Wird die Kurbel bis in die Fahrerkabine geführt, dann findet eine Schwingungsübertragung auf diese von der Dreipunktgerätekupplung aus statt. Wird die Kurbel direkt an der Hubstrebe belassen, dann ist sie für die Bedienungsperson des Ackerschleppers nicht vom Sitz aus erreichbar. Ferner ist es normalerweise einer Bedienungsperson nicht möglich, die Neigung eines in den Boden eingelassenen Beetpfluges zu verändern, da der von ihm aufgebrachte Widerstand zu groß ist.

Um eine Verstellung der Hubstrebe auch unter Last durchführen zu können, ist auch bereits vorgeschlagen worden, die Hubstrebe als doppeltwirkenden Hydraulikzylinder auszubilden (International 55 XL, FR 868 L-8-8), der je nach Druckmittelzufuhr von der einen oder der anderen Seite in seiner Gesamtlänge verändert werden kann. Die Zu-bzw. Abfuhr des Druckmittels wird über ein auf einer Fahrerplattform des Ackerschleppers befindliches Ventil geregelt.

Dieser bekannten Hubstrebe haftet der Nachteil an, daß ein aus dem Hydraulikzylinder austretender Hydraulikkolben ungeschützt ist und somit ständig von Schmutz und Feuchtigkeit beaufschlagt wird, was zu einem Verschleiß seiner Oberfläche führt, so daß dann ein kostenaufwendiger Austausch der beschädigten Teile erforderlich wird und sich der Kolben gegenüber dem Zylindergehäuse ungewollt verschieben kann. Außerdem besteht ständig die Gefahr, daß durch einen Fehler in dem Hydrauliksystem der Kolben plötzlich nicht mehr in dem Zylindergehäuse gehalten werden kann und sich unkontrolliert nach unten bewegt.

Ferner muß eine den Hydraulikzylinder mit Druckflüssigkeit versorgende Hydraulikpumpe entsprechend groß ausgelegt werden, damit der untere Lenker problemlos über den Hydraulikzylinder angehoben werden kann. Mit dem Anlegen eines ausreichend großen Druckes geht jedoch auch die Möglichkeit einer Feineinstellung verloren, bzw. sie kann nur unter hohem Aufwand gewahrt werden.

Die der Erfindung zugrunde liegende Aufgabe wird darin gesehen, die Verstellung der Hubstrebe einfacher und praxisfreundlicher zu gestalten.

Diese Aufgabe ist gemäß der Erfindung dadurch gelöst worden, daß der Fremdkraftantrieb von einem fernsteuerbaren, eine Drehbewegung erzeugenden Motor aus erfolgt.

Auf diese Weise kann unter Zuhilfenahme eines Hydraulik-, eines Pneumatik-oder in ganz besonderer Weise eines Elektromotors die Drehung einer bekannten und bewährten Hubspindel ausgeführt werden. Obgleich es sehr praktisch und nützlich ist, wenn ein Ausgangsglied des Motors bereits eine Drehbewegung ausführt, die lediglich noch der Gewindespindel aufgegeben werden muß, ist es auch ohne weiteres möglich, die Drehbewegung der Gewindespindel durch eine translatorische Bewegung der Motors, beispielsweise eines Kolbens, der tangential an der Gewindespindel angreift, zu erzeugen.

Insbesondere bei der Verwendung eines Elektromotors kann ein handelsüblicher Elektromotor verwendet werden, der mit einem Strom unter der Spannung des elektrischen Systems, das mit der Hub-und Senkeinrichtung verbunden ist, gespeist wird und in einfacher Weise durch eine Verdrehung der Gewindespindel eine Veränderung der Länge der Hubstrebe hervorruft. Bei einem Ackerschlepper kann der Motor mit einem Strom unter einer Spannung von 12 V von der Batterie aus betrieben werden. Daraus ergibt sich zudem der Vorteil, daß der Ackerschlepper nicht in Betrieb sein muß, um den Elektromotor zu betreiben, sondern daß allein die in der Batterie gespeicherte Energie ausreicht.

Die sich aus den den Erfindungsgedanken fortentwickelnden Merkmale der Unteransprüche entweder für sich oder in Verbindung miteinander ergebenden Vorteile werden darin gesehen, daß etwa durch die Verwendung eines Untersetzungsgetriebes ein schnellaufender Motor verwendet werden kann, der, bedingt durch die sich aus dem Produkt der Drehzahl und dem Drehmoment ergebende Leistung, mit einem geringen Drehmoment ausgestattet sein kann. Außerdem führt die Verwendung eines Schneckengetriebes zu einem Selbsthemmungseffekt der Gewindespindel gegenüber der Gewindemutter, so daß auch bei großer angreifender äußerer Kraft eine Verstellung der Hubstrebe nicht zu befürchten ist. Um so größer ist der Nutzen, wenn das Schneckengetriebe und das Untersetzungsgetriebe gemeinsam angewendet werden, da dann beide Vorteile gegeben sind, wobei eine Belastung des Untersetzungsgetriebes beim Einwirken äußerer Kräfte unterbleibt, wenn der Selbsthemmeffekt direkt an dem der äußeren Kraft unterliegenden Teil, nämlich der Gewindespindel, eintritt. Die nach einer Fortentwicklung des Erfindungsgedankens sich ergebende Bauart des Schnecken-und des Untersetzungsgetriebes führt zu einem kostengünstigen und montagefreundlichen Verstellungsmechanismus für die Hubstrebe.

Die Steuerung der Längenveränderung der Hubstrebe bei Verwendung eines Elektromotors durch die Endkontaktschalter und den ersten und zweiten Schalter bedeuten außer einem Höchstmaß an Funktionssicherheit der erfindungsgemäßen Hubstrebe auch eine bedeutende Komforterhöhung für die die Hubstrebe verstellende Bedienungsperson. Insbesondere bei einem Ackerschlepper mit einer Fahrerkabine ermöglicht es der zweite Schalter erst, die Hubstrebe auch von außerhalb der Fahrerkabine, aber auch außerhalb des Geräteanbau-und somit auch des Gefahrenbereichs zu verstellen.

Jedoch kann die erfindungsgemäße Hubstrebe auch bei einer stationären Verladeeinrichtung an einer Verladerampe oder bei einer Hub-und Senkeinrichtung an einem sonstigen Gerät Anwendung finden.

Ferner können für die Steuerung des Hydraulik-oder Pneumatikmotors ebenfalls die Schalter und Endkontaktschalter verwendet werden, wozu eventuell die den Druckmittelstrom zu diesen Motoren steuernden Ventile über elektrisch betätigbare Magnetventile zu bedienen wären.

Einem weiteren Vorschlag gemäß der Erfindung zufolge kann der Antrieb für den Elektromotor durch einen Elektrokreis erfolgen, der dadurch gekennzeichnet ist, daß die Stromzufuhr zu dem Elektromotor über einen ersten und einen zweiten Schalter erfolgt, von denen der erste Schalter auf der Bedienungsplattform und der zweite Schalter in der Nähe, jedoch außerhalb, des Geräteanbaubereiches angeordnet ist.

In der Zeichnung ist ein nachfolgend näher beschriebenes Ausführungsbeispiel der Erfindung dargestellt. Es zeigt:

Figur 1 den rückwärtigen Bereich eines Ackerschleppers, mit einer erfindungsgemäßen Hubstrebe in Seitenansicht,

Figur 2 die erfindungsgemäße Hubstrebe in einer Vorderansicht und teilweise aufgebrochen dargestellt,

Figur 3 einen Teil der erfindungsgemäßen Hubstrebe in Seitenansicht und

Figur 4 einen elektrischen Schaltplan.

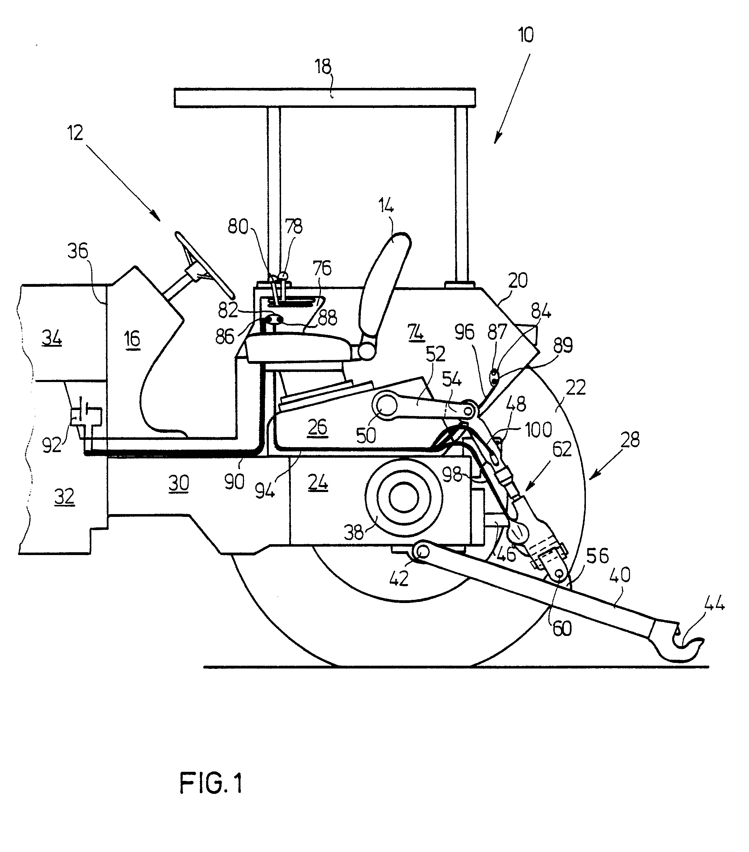

Von einem in Figur 1 teilweise dargestellten Ackerschlepper 10 ist im wesentlichen eine Fahrerplattform 12 mit einem Sitz 14 und einer vorderen Bedienungskonsole 16 zu erkennen, wobei sich oberhalb der Fahrerplattform 12 ein Verdeck 18 und rechts seitlich der Fahrerplattform 12 ein Kotflügel 20 erstreckt, der ein rechtes Hinterrad 22 teilweise abdeckt.

Im Folgenden benutzte Begriffe wie rechts, links, vor, hinter, oben und unten beziehen sich jeweils auf die Vorwärtsfahrtrichtung des Ackerschleppers 10. Unterhalb der Fahrerplattform 12 befindet sich ein Getriebegehäuse 24, auf welches ein Krafthebergehäuse 26 für eine hydraulische Dreipunktgerätekupplung 28 aufmontiert ist. Das Getriebegehäuse 24 ist ferner über ein Kupplungsgehäuse 30 an eine Antriebsmaschine 32 angeschlossen, die selbst wieder von einer Motorhaube 34 abgedeckt wird, die an einer Vorderseite 36 der Bedienungskonsole 16 angreift.

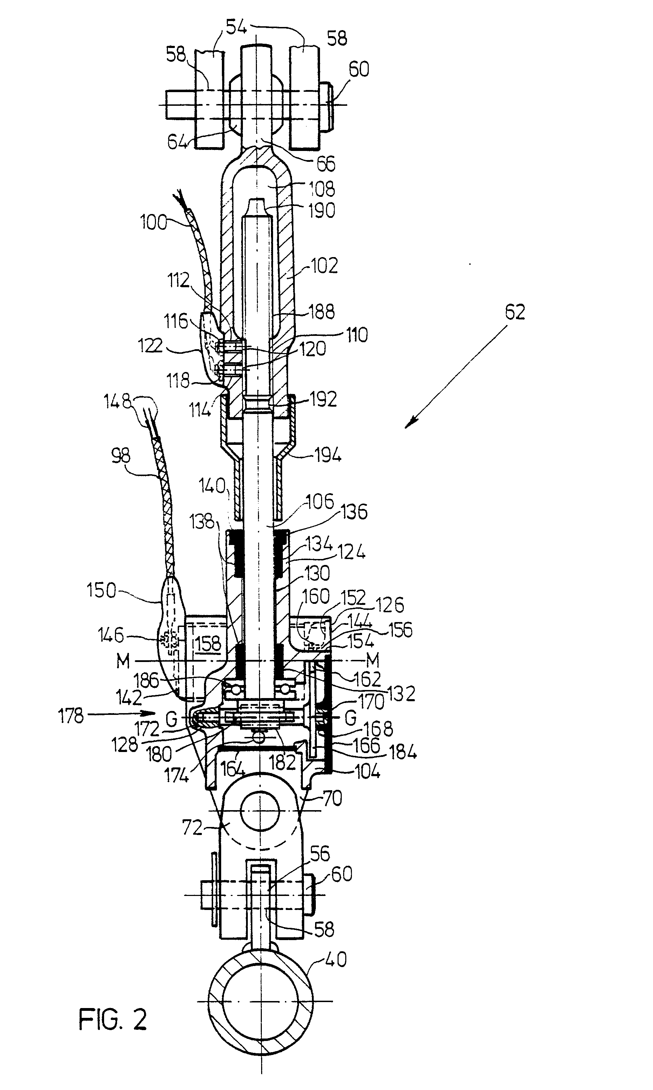

In der Figur 1 ist zudem ein sich seitlich von dem Getriebegehäuse 24 weg erstreckender linker Achstrichter 38 zu erkennen, unterhalb dessen ein linker unterer Lenker 40 der Dreipunktgerätekupplung 28 an einem Lager 42 vertikal und in begrenztem Maß auch horizontal schwenkbar angreift. Der untere Lenker 40 ist an seinem rückwärtigen Ende mit einem Fanghaken 44 versehen, der der Verbindung mit einem an den Ackerschlepper 10 anzuhängenden, jedoch nicht gezeichneten Gerät dient. Selbstverständlich kann anstatt des Fanghakens 44 auch eine normale Kugelösenkupplung an dem unteren Lenker 40 angebracht sein. Außerdem erstreckt sich von dem Getriebegehäuse 24 nach hinten weg eine Zapfwelle 46, die jedoch nur angedeutet ist. Oberhalb der Zapfwelle 46 ist an dem Getriebegehäuse ein Halter 48 für einen in der Zeichnung nicht berücksichtigten oberen Lenker angebracht. Seitlich aus dem Krafthebergehäuse 26 heraus erstreckt sich eine Hubwelle 50, die über einen im Inneren des Krafthebergehäuses 26 gelegenen nicht sichtbaren Hydraulikkolben geschwenkt werden kann. Auf das äußere Ende der Hubwelle 50 ist ein Hubarm 52 formschlüssig aufgesetzt, der beim Verschwenken der Hubwelle 50 eine Kreisbewegung mit dieser durchführt. Das rückwärtige Ende des Hubarms 52 ist als Aufnahmegabel 54 ausgebildet, und der untere Lenker 40 ist in Fahrtrichtung betrachtet ungefähr in seiner Mitte oben mit einer Lasche 56 versehen. Die Aufnahmegabel 54 und die Lasche 56 sind mit lediglich aus Figur 2 zu erkennenden Bohrungen 58 versehen, durch die sich jeweils ein Bolzen 60 erstreckt.

Zwischen dem unteren Lenker 40 und dem Hubarm 52 ist eine erfindungsgemäße Hubstrebe 62 angeordnet, die oben mit einer eine Kugelöse 64 aufweisenden Lasche 66 und unten mit einer zwei Bohrungen 68 enthaltenden Gabel 70 endet. Die Hubstrebe 62 wird dergestalt mit dem Hubarm 52 verbunden, daß die Lasche 66 in die Aufnahmegabel 54 eingeschoben und der Bolzen 60 durch die Bohrungen 58 und die Kugelöse 64 gesteckt wird, während die Gabel 70 mittels eines Kreuzgelenkgliedes 72 die Lasche 56 auf dem unteren Lenker 40 übergreift und dort mittels Bolzen 60 gesichert wird.

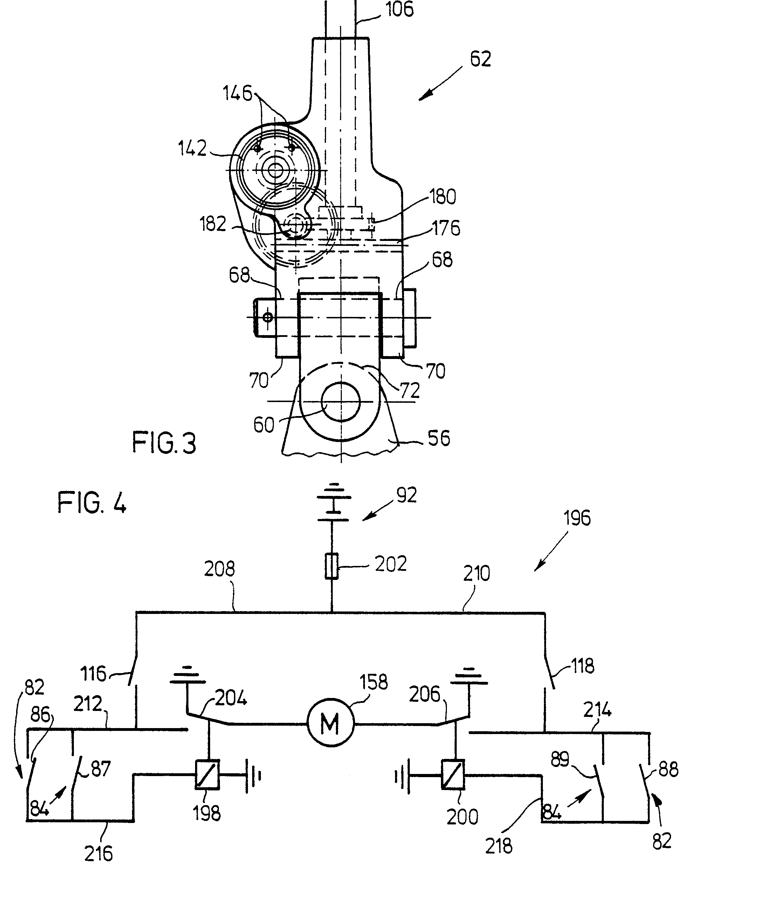

Aus Figur 1 ist ferner zu entnehmen, daß an einer Innenseite 74 des rechten Kotflügels 20 eine Konsole 76 befestigt ist, in der zwei Hebel 78, 80 geführt sind, von denen ein Hebel 78 zum Anheben und Absenken der Dreipunktgerätekupplung 28 dient. Seitlich an dieser Konsole 76 und an der Innenseite 74 des rechten Kotflügels 20, am rückwärtigen Ende sind ein erster und ein zweiter momentan betätigbarer Schalter 82 und 84 angebracht, die jeweils einen Bedienungsknopf 86, 87 für "Heben" und einen Bedienungsknopf 88, 89 für "Senken" aufweisen. Der erste Schalter 82 steht über ein Kabel 90 mit einer Batterie 92 in Verbindung, die jedoch nur schematisch und sich unterhalb der Motorhaube 34 befindlich gezeichnet ist. Von dem ersten Schalter 82 führt zudem ein Kabelbaum 94 fort, der sich am rückwärtigen Ende des Getriebegehäuses 24 in eine erste, zum zweiten Schalter 84 führende, eine zweite, unten mit der Hubstrebe 62 und eine dritte, oben mit der Hubstrebe 62 verbundenen Leitung 96, 98 und 100 teilt. Die Details des elektrischen Schaltkreises werden später anhand von Figur 4 beschrieben.

In Figur 1 ist absichtlich das linke Hinterrad und der zugehörige Kotflügel weggelassen worden, damit ein ungehinderter Blick auf die Fahrerplattform 12 und die Dreipunktgerätekupplung 28 entsteht. Ferner sind für die Erfindung nicht direkt erforderliche Teile wie Schalthebel, Pedale und sonstige Steuereinrichtungen weggelassen worden, um die Zeichnung nicht zu unübersichtlich werden zu lassen. Wie üblich ist die Dreipunktgerätekupplung 28 bezüglich der vertikalen Längsmittenebene des Ackerschleppers 10 mit Ausnahme der Hubstrebe 62 symmetrisch ausgebildet, so daß sich jeweils nicht ersichtlich rechts des Getriebegehäuses 24 ebenfalls ein unterer Lenker, ein Hubarm, ein Lager und eine Hubwelle befinden. Lediglich eine Hubstrebe ist dort in herkömmlicher Bauart ausgeführt, wobei dies nur aus Zweckmäßigkeit geschieht, denn es ist auch möglich, die erfindungsgemäße Hubstrebe 62 zusätzlich oder nur rechts anzuordnen. Des weiteren wird Bezug auf die Figuren 2 und 3 genommen.

Die Hubstrebe 62 besteht demnach aus einem oberen länglichen und einem unteren Gehäuseteil 102 und 104, die über eine Gewindespindel 106 miteinander verbunden sind. Oben an den oberen Gehäuseteil 102 ist die Lasche 66 mit der Kugelöse 64 angeformt, so daß er mit dem Hubarm 52 in Verbindung steht. Der untere Gehäuseteil 104 ist an seinem unteren Ende mit der Gabel 70 ausgerüstet, die in sich das Kreuzgelenkglied 72 aufnimmt, welches wiederum die Lasche 56 auf dem unteren Lenker 40 übergreift. Die Anordnung der Hubstrebe 62 mit Blick auf die Zeichnung ist die gleiche wie die an dem Ackerschlepper 10.

Der obere Gehäuseteil 102 ist mit einem Hohlraum 108 versehen, der sich über eine eine Gewindemutter bildende Gewindebohrung 110 nach außen, und zwar nach unten, dem der Lasche 66 abgewandten Ende 110 hin öffnet. Der Innendurchmesser des Hohlraumes 108 ist größer als der der Gewindebohrung 110. Allerdings könnte der Hohlraum 108 auch einfach aus einer Verlängerung der Gewindebohrung 110 gebildet werden Radial von der Gewindebohrung 110 nach außen erstrecken sich zwei Bohrungen 112, 114, die jeweils der Aufnahme eines Endkontaktschalters 116, 118 dienen. Jeder Endkontaktschalter 116, 118 ist mit einem federbelasteten nach außen vorgespannten Stößel 120 zum Öffnen bzw. Schließen des Endkontaktschalters 116,118 ausgerüstet. Sie weisen in Richtung der Längsachse der Gewindebohrung 110 einen vorherbestimmten Abstand zueinander auf. Die Endkontaktschalter 116, 118 sind beide in einen Stecker 122 eingegossen und in diesem mit der dritten Leitung 100 verbunden. Der Stecker 122 ist derart ausgebildet, daß er keine Feuchtigkeit an die Endkontaktschalter 116, 118 und an die erste Leitung 96 gelangen läßt.

Der untere Gehäuseteil 104 weist ein Halsstück 124, ein Motorgehäuse 126, ein Getriebegehäuse 128 und eine Gabel 70 auf, die gemeinsam aus einem Guß gefertigt sind, was jedoch nicht die Möglichkeit ausschließt, diese ebenso aus Einzelteilen zu bilden und entsprechend zu verbinden. Die Längsmittenachse des Halsstückes 124 fällt mit der Längsmittenachse der Gewindespindel 106 zusammen und verläuft rechtwinklig zu der Längsmittenachse des Motor-und des Getriebegehäuses, die in der Zeichnung mit MM und GG angedeutet sind.

Das Halsstück 124 weist eine Längsbohrung 130 mit einer unteren und einer oberen Lagerausnehmung 132 und 134 auf, wobei sich die obere Lagerausnehmung 134 nach außen hin in einen Dichtungsringraum 136 öffnet. Die Lagerausnehmungen 132, 134 nehmen jeweils in sich ein Nadel-oder Rollenlager 138 und der Dichtungsringraum 136 einen Radialdichtring 140 auf, so daß ein Eintreten von Flüssigkeit oder Schmutz in die Längsbohrung 130 verhindert wird. Anstatt der Rollen-oder Nadel lager 138 können ebenso Gleitlager verwendet werden, die einfach als Kunststoffbüchsen ausgebildet werden. Die Längsbohrung 130 ist mit einem Innendurchmesser ausgebildet, der geringfügig größer ist als der Außendurchmesser der Gewindespindel 106 in diesem Bereich.

Das Motorgehäuse 126 ist zylindrisch ausgeführt und mit einem linken und einem rechten Deckel 142 und 144 verschlossen. Der linke Deckel 142 trägt auf seiner Außenseite zwei Anschlußpole 146, die jeweils mit einem Draht 148 der zweiten Leitung 98 verbunden sind, und mittels einer Kappe 150 aus Plastik oder Gummi gegen Witterungseinflüsse und Schmutz gesichert sind. Der rechte Deckel 144 ist an seiner Innenseite 152 mit einem eine Lagerbohrung 154 aufweisenden Lagerhals 156 versehen. Beide Deckel 142, 144 können entweder in das Motorgehäuse 126 eingeschraubt, an dieses angeschraubt oder in dieses eingepreßt bzw. eingeklebt werden. In dem Motorgehäuse 126 ist ein mit einer Spannung von 12 V betreibbarer Elektromotor 158 mit einer Leistung von 150 W drehfest eingebaut und mittels der Deckel 142, 144 axial gehalten. Auf der rechten Seite des Elektromotors 158 tritt eine Antriebswelle 160 aus, die ein Antriebsrad 162 von geringem Außendurchmesser trägt.

Die Antriebswelle 160 erstreckt sich durch das Antriebsrad 162 hindurch und ist in der Lagerbohrung 154 in dem Lagerhals 156 gelagert. Anderenends ist ein in der Zeichnung nicht ersichtlicher Stator des Elektromotors 158 mit den Anschlußpolen 146 verbunden, um einen ebenfalls nicht gezeichneten mit der Antriebswelle 160 verbundenen Rotor bei entsprechender Stromzufuhr von der Batterie 92 Drehung zu versetzen. Die Längsmittenachse des Getriebegehäuses 128 und des Motorgehäuses 126 verlaufen zueinander parallel und liegen seitlich der Längsmittenachse der Gewindespindel 106. Das Getriebegehäuse 128 und das Motorgehäuse 126 stehen zumindest im Bereich des Antriebsrades 162 miteinander in Verbindung.

Das zu zwei Seiten offene Getriebegehäuse 128 wird an seiner Unterseite mit einem Deckel 164, der eingepreßt wird und an seiner rechten Seite mit einem Deckel 166 verschlossen, der an-oder eingeschraubt wird. Der Deckel 166 an der rechten Seite ist in der gleichen Art wie der rechte Deckel 144 des Motorgehäuses 126 ausgeführt und ist ebenfalls mit einem Lagerhals 168 und einer Lagerbohrung 170 an seiner Innenseite versehen. Gegenüber dem Deckel 166 und konzentrisch zu der Längsmittenachse seiner Lagerbohrung 170 ist in das Getriebegehäuse 128 eine weitere Lagerbohrung 172 eingedreht. Quer zu und unterhalb von der die beiden Lagerbohrungen 170, 172 verbindenden Längsmittenachse verläuft die Längsmittenachse zweier in das Getriebegehäuse 128 eingearbeiteter Löcher 174, die in sich einen Spannstift 176 aufnehmen, dessen Bedeutung weiter unten erläutert werden wird.

Ein sich in dem Getriebegehäuse 128 befindliches Getriebe 178 besteht aus einem am unteren Ende der Gewindespindel 106 befestigten Schneckenrad 180, einer mit diesem kämmenden Schneckenwelle 182 und einem auf die Schneckenwelle 182 aufgesetzten und mit dem Antriebsrad 162 des Elektromotors 158 kämmenden größeren Stirnrad 184, wobei die Schneckenwelle 182 auf ihrem mittleren Bereich als Schnecke ausgebildet ist.

Die Schneckenwelle 182 ist einenends, und zwar an dem mit dem Stirnrad 184 versehenen Ende in der Lagerbohrung 170 des Deckels 166 und anderenends in der weiteren Lagerbohrung 172 drehbar gelagert. Beide Lagerbohrungen 170, 172 sind entweder als Gleitlager ausgebildet, wie dies beim Ausführungsbeispiel der Fall ist, oder sie sind mit einem separaten Gleit-oder Wälzlager versehen. Das Schneckenrad 180, bzw. das Ende der Gewindespindel 106 stützen sich auf dem Spannstift 176 in der einen Richtung ab, während sich in der anderen Richtung zur Vermeldung einer Axialverschiebung der Gewindespindel 106 ein Axialkugellager 186 zwischen dem Schneckenrad 180 und dem Halsstück 124 erstreckt.

Da das Getriebegehäuse 128 rundum geschlossen ist, kann es mit Fett oder Öl zum Schmieren des Getriebes 178 aufgefüllt werden.

Die Gewindespindel 106 ist als eine runde Stange ausgebildet, an deren oberen Endbereich sich ein Gewindeteil 188 befindet. Sowohl oben als auch unten geht der Gewindeteil 188 über Schrägen in jeweils eine Ringnut 190 und 192 über. Der Gewindeteil 188 selbst ist mit Rechtsgewinde versehen und nimmt etwas mehr als die Länge des Hohlraumes 108 ein. An ihrem unteren Ende ist die Gewindespindel 106 mit einem Paßsitz versehen, auf den das Schneckenrad 180 aufgeschrumpft ist. Jedoch könnte das Schneckenrad 180 auch über eine Keil-oder Gewindeverbindung starr mit der Gewindespindel 106 verbunden sein. Auf nahezu dem gesamten sich zwischen dem oberen und dem unteren Gehäuseteil 102 und 104 erstreckenden Bereich der Gewindespindel 106 wird diese von einer trichterförmigen Schutzhülle 194 umgeben, die zudem den oberen Gehäuseteil teilweise umgreift und auf der Gewindespindel 106 form-oder kraftschlüssig gehalten wird. Diese Schutzhülle 194 aus Blech oder Kunststoff verhindert das Vordringen von Schmutz und Spritzwasser zu der Gewindebohrung 110 und dem Gewindeteil 188.

Wird der Elektromotor 158 in Drehung versetzt, beispielsweise mit Blick auf Figur 3 im Uhrzeigerdrehsinn, dann wird das Antriebsrad 162 das Stirnrad 184 im Gegenuhrzeigerdrehsinn verdrehen und über das Schneckenrad 180 und die Schneckenwelle 182 eine im Uhrzeigerdrehsinn gerichtete Drehbewegung· der Gewindespindel 106 hervorrufen, wie dies zu sehen ist, wenn man von unten auf das Schneckenrad 108 blickt, so daß sich die Gewindespindel 106 in den oberen Gehäuseteil 102 hineindreht. Eine Drehung des Antriebsrades 162 im Gegenuhrzeigerdrehsinn bewirkt analog eine im Gegenuhrzeigerdrehsinn gerichtete Drehbewegung der Gewindespindel 106, so daß diese sich aus der Gewindebohrung 110 des oberen Gehäuseteils 102 herausdreht. Das Verdrehen der Gewindespindel 106 im Uhrzeigerdrehsinn bewirkt demnach eine Verkürzung und das Verdrehen der Gewindespindel 106 im Gegenuhrzeigerdrehsinn eine Verlängerung der Gesamtlänge der Hubstrebe 62. Um zu vermeiden, daß sich die Gewindespindel 106 um mehr als ein gewolltes Maß aus der Gewindebohrung 110 heraus oder in diese hineinschraubt, sind die beiden Endkontaktschalter 116, 118 vorgesehen. Um diese betätigen zu können, sind jeweils am Ende des Gewindeteils 188 der Gewindespindel 106 die Ringnuten 190, 192 eingedreht, in die die Stößel 120 der Endkontaktschalter 116, 118 eingreifen können, sobald sie mit diesen in Deckung geraten. Das Eingreifen eines Stößels 120 in eine Ringnut 190, 192 führt zu einer Unterbrechung der Stromzufuhr zu dem Elektromotor 158, so daß eine weitere Verdrehung der Gewindespindel 106 nicht mehr erfolgen kann. Dabei ist der obere Endkontaktschalter 116 der oberen und der untere Endkontaktschalter 118 der unteren Ringnut 190 bzw. 192 zugeordnet. Das bedeutet, daß sobald der Stößel 120 des oberen Endkontaktschalters 116 in die obere Ringnut 190 eindringt, ein weiteres Herausdrehen der Gewindespindel 106 aus der Gewindebohrung 110 verhindert wird, während beim Eindringen des Stößels 120 des unteren Endkontaktschalters 118 in die untere Ringnut 192 ein weiteres Hineindrehen der Gewindespindel 106 in die Gewindebohrung 110 unterbleibt. Somit ist gewährleistet, daß die Gewindespindel 106 nicht außer Eingriff mit dem oberen Gehäuseteil 102 gerät, bzw. nicht so weit in diesen eingedreht werden kann, daß sie oder der obere Gehäuseteil 102 beschädigt werden. Sowohl beim Ein-als auch beim Austreten eines Stößels 120 in die bzw. aus einer der Ringnuten 190, 192 gleitet der betreffende Stößel 120 über die Schräge und kann so ohne übermäßig radial belastet zu werden aus der einen in die andere Endlage gebracht werden.

Die Steuerung des Elektromotors 158, d.h. seine Umpolung erfolgt von einer Bedienungsperson über den ersten oder über den zweiten Schalter 82 bzw. 84 und zwar abhängig davon, wo diese sich befindet. Insbesondere der am rückwärtigen Ende des Kotflügels 20 angebrachte zweite Schalter 84 erlaubt es der Bedienungsperson die Hubstrebe 62 in ihrer Länge beim Anhängen des Gerätes und dabei insbesondere eines Pfluges zu verändern. Dieses Merkmal führt beim Anhängen von Beetpflügen zu einem nicht unerheblichen Zeitgewinn und gewährleistet, daß sich die Bedienungsperson nicht zwischen das Gerät und den Ackerschlepper 10 stellt, um die Hubstrebe 62, wie bisher üblich, mit der Hand in der Länge zu verstellen. Der zweite Schalter 84 könnte auch an der Innenseite des linken Kotflügels oder an beiden Kotflügeln angebracht sein.

Bedingt durch die große Untersetzung in dem Getriebe 178 braucht der Elektromotor 158 nicht übermäßig stark ausgelegt zu werden, und es ist die Möglichkeit geschaffen, die Länge der Hubstrebe 62 auch unter Last zu verändern. Diese Möglichkeit versetzt eine Bedienungsperson in die Lage, ein angehängtes Gerät während der Arbeit optimal zu führen. Beispielsweise kann beim Arbeiten mit einer Bodenfräse die Bodenoberfläche auch dann noch eben gehalten werden, wenn der Ackerschlepper 10 auf der einen Seite mit seinem Hinterrad tiefer in den Boden eindringt als auf der anderen Seite. Es kann dadurch auch vermieden werden, daß ein Saatbeet an seiner Seite geneigt verläuft, weil etwa der Ackerschlepper 10 mit einem Hinterrad in einer Furche fährt. Zwar ist dies prinzipiell auch mit den herkömmlichen, von Hand verstellbaren Hubstreben möglich. Da die Bedienungsperson hierzu jedoch von dem Ackerschlepper 10 absteigen muß, wird dies nicht vorgenommen.

Ein in Figur 4 dargestellter Schaltkreis 196, der zeigt, wie der Elektromotor 158 in Betrieb gesetzt werden kann, besteht außer dem Elektromotor 158, der Batterie 92, den Endkontaktschaltern 116, 118 und dem ersten und dem zweiten Schalter 82 und 84 aus zwei Relais 198 und 200, einer Sicherung 202, zwei Schaltern 204, 206 und einer Vielzahl von Drahtverbindungen, die in dem Kabel 90, der ersten, zweiten und dritten Leitung 96, 98 und 100 geführt sind. So steht die Sicherung 202 über einen Draht 208 mit dem Endkontaktschalter 116 und über einen Draht 210 mit dem Endkontaktschalter 118 in Verbindung, wobei der Endkontaktschalter 116 parallel über eine Leitung 212 und der Endkontaktschalter 118 parallel über eine Leitung 214 mit den Schaltern 82, 84 und dem Elektromotor 158 verbunden ist. Die ersten und zweiten Schalter 82 und 84 wiederum sind zum einen über einen Draht 216 mit dem Relais 198 und zum anderen über einen Draht 218 mit dem Relais 200 verbunden. Die Leitungen 212 und 214 zwischen den Endkontaktschaltern 116 und 118 und dem Elektromotor 158 führen über die Schalter 204 bzw. 206, die mittels der Relais 198, 200 geschlossen oder an Masse gelegt werden können. Die ersten und zweiten Schalter 82 und 84 sind jeweils momentan betätigbare Kontaktschalter, die nur solange eine Verbindung herstellen, wie man auf die entsprechenden Bedienungsknöpfe 86, 87, 88, 89 drückt. Die Bedienungsknöpfe 86 bis 89 stehen hier für die Kontakte selbst. Läßt man diese jedoch los, dann kehren die ersten und zweiten Schalter 82 und 84 wieder in den geöffneten Zustand zurück.

Zur folgenden Beschreibung der Funktion eines Hubvorganges durch die Hubstrebe 62 wird davon ausgegangen, daß mit Ausnahme der Endkontaktschalter 116, 118 alle übrigen Schalter 82, 84, 204, 206 offen sind und die Bedienung der Hubstrebe 62 von dem zweiten Schalter 84 aus erfolgt. Eine Bedienungsperson wird hierzu den Bedienungsknopf 87 des zweiten Schalters 84 für Senken niederdrücken und somit den Stromkreis zwischen der Batterie 92 und dem Elektromotor 158 über den Draht 208, den Endkontaktschalter 116, die Leitung 212, den Schalter 84 und den Schalter 204 schließen. Der Schalter 204 wurde mittels des Relais 198, das durch die Schließung des zweiten Schalters 84 angezogen worden ist, geschlossen und läßt somit einen Stromfluß zu dem Elektromotor 158 zu. Auf der anderen Seite ist der Elektromotor 158 mittels der Leitung 214 an Masse gelegt. Sobald die Hubstrebe 62 in ihre maximal zulässige obere Stellung gelangt ist, wird der Stößel 120 des Endkontaktschalters 116 in die ihm zugeordnete Ringnut 190 eintreten und den Endkontaktschalter 116 öffnen, so daß der Stromfluß zu dem Relais 198 unterbrochen wird, woraufhin dieses abfällt und den Schalter 204 öffnet, so daß der Elektromotor 158 nicht mehr weiter mit elektrischer Energie gespeist wird. Eine weitere Bewegung des Elektromotors 158 kann dann nur noch im umgekehrten Drehsinn erfolgen, wozu entweder der erste oder der zweite Schalter 82 oder 84 durch die Betätigung des jeweiligen Bedienungsknopfes für Senken 88 bzw. 89 zu drücken wäre. Beim sodann eingeleiteten Verdrehen der Gewindespindel 106 in der anderen Richtung wird dann der Stößel 120 des Endkontaktschalters 116 wieder aus der Ringnut 190 gedrückt und der Endkontakschalter 116 wieder geschlossen.

**Ansprüche**

1. Längenveränderliche Hubstrebe für eine Hub- und Senkeinrichtung (28), insbesondere für eine Dreipunktgerätekupplung eines Ackerschleppers (10), mit einer Gewindespindel (106) und einer Gewindemutter (110), die beide miteinander verbunden sind und über Fremdkraftantrieb gegeneinander beweglich sind, dadurch gekennzeichnet, daß der Fremdkraftantrieb von einem fernsteuerbaren, eine Drehbewegung erzeugenden Motor (158) aus erfolgt.

2. Längenveränderliche Hubstrebe nach Anspruch 1, dadurch gekennzeichnet, daß der Motor (158) ein Elektromotor ist.

3. Längenveränderliche Hubstrebe nach Anspruch 1, dadurch gekennzeichnet, daß der Antrieb von dem Motor (158) auf die Gewindespindel 106 über ein Schneckengetriebe (180, 182) erfolgt.

4. Längenveränderliche Hubstrebe nach Anspruch 1, dadurch gekennzeichnet, daß der Antrieb zwischen dem Motor (158) und der Gewindespindel - (106) über ein Untersetzungsgetriebe (162, 184) erfolgt.

5. Längenveränderliche Hubstrebe nach Anspruch 1, dadurch gekennzeichnet, daß der Antrieb zwischen dem Motor (158) und der Gewindespindel - (106) über ein Untersetzungsgetriebe (162, 184) und ein Schneckengetriebe (180, 182) erfolgt.

6. Längenveränderliche Hubstrebe nach Anspruch 4, dadurch gekennzeichnet, daß sich das Schneckengetriebe (180 , 182) zwischen dem Untersetzungsgetriebe (164, 184) und der Gewindespindel - (106) befindet.

7. Längenveränderliche Hubstrebe nach einem oder mehreren der vorherigen Ansprüche, dadurch gekennzeichnet, daß das Untersetzungsgetriebe - (162, 184) als Stirnradgetriebe ausgebildet ist, daß das Schneckengetriebe (180, 182) als Stirnradgetriebe ausgebildet ist, daß das Schneckengetriebe - (180, 182) aus einem mit der Gewindespindel - (106) verbundenen Schneckenrad (180) und einer mit dem Stirnradgetriebe verbundenen Schneckenwelle (182) besteht, wobei die Schneckenwelle - (182) tangential an dem Schneckenrad (180) angreift.

8. Längenveränderliche Hubstrebe nach Anspruch 2, dadurch gekennzeichnet, daß zwei die Stromzufuhr zu dem Elektromotor (158) ermöglichende oder diese unterbrechende Endkontaktschalter - (116, 118) und auf der Gewindespindel (106) zwei Schaltstellen (190, 192) vorgesehen sind, über welche der eine oder der andere Endkontaktschalter (116, 118) betätigt werden kann.

9. Längenveränderliche Hubstrebe nach Anspruch 8, dadurch gekennzeichnet, daß die Schaltstellen - (190, 192) die Form zweier in die Gewindespindel - (106) eingearbeiteter Ringnuten aufweisen.

10. Längenveränderliche Hubstrebe nach Anspruch 2 für ein landwirtschaftliches Arbeitsfahrzeug (10), insbesondere für einen Ackerschlepper (10), mit einer Bedienungsplattform (12) und einem Geräteanbaubereich, dadurch gekennzeichnet, daß die Stromzufuhr zu dem Elektromotor (158) über einen ersten und einen zweiten Schalter (82, 84) erfolgt, von denen der erste Schalter (82) auf der Bedienungsplattform (12) und der zweite Schalter - (84) in der Nähe, jedoch außerhalb, des Geräteanbaubereichs angeordnet ist.

11. Längenveränderliche Hubstrebe nach einem oder mehreren der vorherigen Ansprüche, dadurch gekennzeichnet, daß der erste und der zweite Schalter (82 und 84) Kontakte für Heben und Senken (86, 88, 87, 89) aufweisen, der Elektromotor - (158) in der Drehrichtung umkehrbar ist und über zwei zueinander parallel geschaltete Schaltkreise - (208, 210, 212, 214) mit Energie gespeist werden kann, wobei in dem Schaltkreis für die eine Drehrichtung (208, 212) ein Endkontaktschalter (116) für die Hubbewegung, in Parallelschaltung die Kontakte (86, 87) für Heben des erstens und des zweiten Schalters (82 und 84) und ein die Stromzufuhr zu dem Elektromotor (158) ermöglichender relaisbetätigter Schalter (204) vorgesehen sind, während in dem Schaltkreis (210, 214) für die andere Drehrichtung ein Endkontaktschalter (118) für die Senkbewegung, in Parallelschaltung die Kontakte (88, 89) für Senken des ersten und des zweiten Schalters (82 und 84) und ein die Stromzufuhr zu dem Elektromotor (158) ermöglichender relaisbetätigter Schalter (206) enthalten sind.

0 199 977

FIG.1

FIG. 2

FIG.3

FIG. 4